# EUROPÄISCHE PATENTSCHRIFT

(11) **EP 2 675 668 B1**
(45) Veröffentlichungstag und Bekanntmachung des Hinweises auf die Patenterteilung: **28.07.2021**
(21) Anmeldenummer: 11808643.8
(22) Anmeldetag: 22.12.2011
(51) Int. Cl.: B60T 8/171, B60T 8/1755, B60T 17/22, G01P 15/18

(54) **FLEXIBLES KOMBINATIONSSENSORIKMODUL FÜR EIN FAHRZEUG**
FLEXIBLE COMBINATION SENSOR SYSTEM MODULE FOR A VEHICLE
MODULE DE DÉTECTION COMBINÉ FLEXIBLE DESTINÉ À UN VÉHICULE

(30) Priorität: 17.02.2011 DE 102011004333
(43) Veröffentlichungstag der Anmeldung: 25.12.2013
(73) Patentinhaber: Robert Bosch GmbH, 70442 Stuttgart (DE)
(72) Erfinder: WELLHOEFER, Matthias Marcus, 70499 Stuttgart (DE); KOC, Mariusz, 70176 Stuttgart (DE)
(86) Internationale Anmeldenummer: PCT/EP2011/073807
(87) Internationale Veröffentlichungsnummer: WO 2012/110150

(56) Entgegenhaltungen:
- EP-A1- 1 795 902
- US-A- 5 297 052
- US-A- 6 023 664
- None

## Beschreibung

Die vorliegende Patentanmeldung betrifft Sensorsysteme für ein Fahrzeug. Insbesondere betrifft die vorliegende Erfindung ein Kombinationssensorikmodul für ein Fahrzeug, ein Fahrzeug, insbesondere ein Automobil, aufweisend ein erfindungsgemäßes Kombinationssensorikmodul, sowie die Verwendung eines erfindungsgemäßen Kombinationssensorikmoduls in einem Fahrzeug.

### Stand der Technik

Moderne Fahrzeuge weisen gewöhnlich eine Vielzahl von fahrerunterstützten Systemen bzw. Fahrerassistenzsystemen und erweiterten Sicherheitseinrichtungen auf, beispielsweise Gurtstraffer oder Airbags. Um eine ordnungsgemäße Funktion dieser Assistenz- bzw. Sicherheitssysteme sicherzustellen, ist meist eine genaue Kenntnis der aktuellen am Fahrzeug vorherrschenden Bewegungssituation notwendig.

Beispielsweise mögen Beschleunigungssensoren die Beschleunigung bzw. Abbremsung eines Fahrzeuges in eine bestimmte Richtung detektieren, während Drehratensensoren eine Verdrehung bzw. Rotation des Fahrzeugs um eine Achse detektieren mögen.

Gewöhnlich wird hierzu ein dreidimensionales Koordinatensystem X,Y,Z verwendet, wobei X die Längsachse, Y die Querachse sowie Z die Hochachse des Fahrzeugs darstellt. Rollratensensoren wiederum mögen eine Drehung des Fahrzeugs um eine Achse X,Y,Z detektieren.

Bekannt sind mikromechanische Kombimodule, in welchen meist eine Mehrzahl von, insbesondere drei, Sensoren mit zugehörigen Freiheitsgraden angeordnet ist. Dies mögen nicht zwingend ausschließlich drei Beschleunigungssensoren oder drei Rollratensensoren bzw. Drehsensor sein, vielmehr ist auch eine Kombination aus Beschleunigungs- und Drehsensor denkbar.

Verschiedene Fahrerassistenz- bzw. Sicherheitssysteme mögen hierbei jeweils ganz individuelle Sensorkombinationen aufweisen.

Beispielsweise mag für ein ESP-Modul ein Sensor mit drei Freiheitsgraden, somit allgemein ein 3D-Sensorelement, bereitgestellt sein, welches eine Beschleunigung in X- und Y-Richtung sowie eine Rotation um die Z-Achse detektieren mag. Für einen Rollover-Sensor wiederum mag ein 3D-Sensor eine Beschleunigung in Y- und Z-Achse sowie im Weiteren eine Rotation um die X-Achse messen.

Derartige Sensormodule sind jedoch meist auf einen bestimmten Einsatzzweck ausgerichtet bzw. optimiert. Ein einfaches Austauschen ist somit meist nicht möglich.

Die Druckschrift US 5,297,052 A betrifft redundante Trägheitsreferenzsysteme für Flugzeuge. Die Druckschrift EP 1 795 902 A1 betrifft ein Verfahren und ein Gerät zur Beschleunigungsdetektion. Die Druckschrift US 6,023,664 A beschreibt Sensoren für Fahrzeugkollisionen.

### Offenbarung der Erfindung

Ein Aspekt der vorliegenden Erfindung mag somit die Bereitstellung eines flexiblen Sensorikmoduls sein.

Im Lichte dieses Aspekts wird ein Kombinationssensorikmodul für ein Fahrzeug, ein Fahrzeug, insbesondere ein Automobil, aufweisend ein erfindungsgemäßes Kombinationssensorikmodul sowie die Verwendung eines erfindungsgemäßen Kombinationssensorikmoduls in einem Fahrzeug gemäß der unabhängigen Ansprüche bereitgestellt. Bevorzugte Ausgestaltungen ergeben sich aus den abhängigen Ansprüchen.

Die steigende Nachfrage an neuen Funktionen in einem Fahrzeug benötigt gleichzeitig zusätzliche Sensorkanäle. Jedoch werden in sicherheitsrelevanten Komponenten wie beispielsweise einem Airbagsteuergerät oder anderen Integrationsplattformen wie beispielsweise Fahrerassistenzsystemen immer mehr mikromechanische Sensoren verbaut.

Eine solche Sensoranordnung mag bis maximal zu einer 6D-Sensierung ausgebildet sein. 6D mag in diesem Zusammenhang als ein Sensorelement mit sechs Freiheitsgraden gesehen werden, beispielsweise Beschleunigung und Verzögerung für X-, Y- und Z-Achse sowie weiterhin die Rotation um jeweils X-, Y- und Z-Achse. Allgemein mag somit eine "X"D-Sensierung als eine Sensierung mit "X" Freiheitsgraden bzw. "X" unabhängigen Sensorkanälen aufgefasst werden.

Beispielsweise für Aktivlenkungsfunktionen mag sogar eine "6D+redundante" ESP-Sensorik denkbar sein.

Die vorliegende Erfindung mag einerseits die Vereinigung von mindestens einer 5D-Sensorik, mithin Beschleunigung der X-, Y- und Z-Achsen sowie Rotation um X- und Z-Achse realisieren, vorteilhafterweise aber eine 6D-Sensorik, somit jeweils Beschleunigung und Rotation um jeder Y-, Y-, Z-Achse in einem gemeinsamen Sensormodul, enthalten.

Das erfindungsgemäße Sensormodul mag hierbei derart optimiert sein, dass es auch bei defekten oder selektiven Schäden als Modul für bestimmte Funktionen weiterhin verwendbar ist. So mag beispielsweise ein erfindungsgemäßes 6D-Sensormodul, im Falle, dass ein Sensorfreiheitsgrad einen Defekt oder selektiven Schaden aufweist, zumindest als ein 5D-Sensormodul weiter verwendet werden.

Im Rahmen der vorliegenden Erfindung wird somit die Vereinigung von 6D-Sensorik in einem gemeinsamen Sensorkombimodul angezeigt, hierbei aber insbesondere die funktionszugeordnete Anordnung, Ansteuerung, Diagnose und Testbarkeit der einzelnen Komponenten.

Somit mag sich vorteilhaft nur ein Modul herstellen lassen, welches bei vollem Funktionsumfang als 6D-Sensormodul eingesetzt werden mag.

Bei eingeschränkter Funktionalität, somit bei selektiven Defekten, beispielsweise in einem einzelnen Submodul oder einem Sensorpfad, mag das erfindungsgemäße Sensorkombimodul bzw. Kombinationssensorikmodul als ein solches Sensormodul verwendet werden, welches eine reduzierte Sensorik aufweist bzw. für eine bestimmten Einsatzzweck benötigt.

So mag beispielsweise ein Initial als 6D-Sensormodul ausgebildetes Kombinationssensorikmodul im Falle eines selektiven Defektes eines Sensorpfades auch als ESP-Sensormodul, als Rollover-Sensormodul oder als Pitchraten-Sensormodul eingesetzt werden, je nachdem, welcher der fraglichen Sensorpfade defekt ist bzw. den selektiven Schaden aufweist.

Vorteilhaft ergibt sich hierdurch die Reduktion der Modulvarianten, weiterhin eine Reduktion des Entwicklungsaufwandes sowie eine höhere Ausbeute durch Weiterverwendung von Teilausschuss, indem das entsprechende, teildefekte Modul als ein Sensormodul mit reduzierter Funktionalität verwendet werden mag.

Auch mag gezielt eine kostengünstige Variante aus einem 6D-Sensormodul abgeleitet werden, indem zum Beispiel Prüfschritte für eine separate Funktion entfallen, eine Durchkontaktierung von im Modul angeordneter Elektronik nach außerhalb nicht erfolgt oder aber ein Teil des möglicherweise diskret aufgebauten, in sich vollständig abgeschlossenen Modulinnenlebens bzw. Modulkomponenteninnenlebens nicht bestückt wird. Insbesondere für den USamerikanischen Fahrzeugmarkt mag sich eine Kombination aus ESP- und Rollover-Sensorik als besonders vorteilhaft erweisen.

Somit mögen sich mit einem 6D-Sensormodul auch neue Funktionen realisieren lassen, welche weitere Freiheitsgrade bzw. Sensorpfade erfordern, beispielsweise videobasierte Systeme, unterstützt durch die Nickrate des Fahrzeuges.

Erfindungsgemäß weist das Kombinationssensorikmodul für ein Fahrzeug gemäß der vorliegenden Erfindung zumindest zwei Sensorsubmodule auf, welche in einem Kombinationssensorikmodul angeordnet und an die Elektronik des Fahrzeuges anschließbar sind, wobei die zumindest zwei Sensorsubmodule unabhängig voneinander betreibbar sind.

Somit weist das erfindungsgemäße Kombinationssensorikmodul zumindest zwei vollständig unabhängige Bereiche bzw. Blöcke, mithin Sensorelemente oder applikationsspezifische integrierte Schaltungen (ASICs) auf, welche jeweils eine eigenständige Funktion bereitstellen. So mag jeder Bereich bzw. jedes Sensorsubmodul für sich genommen beispielsweise eine 1D-, 2D- oder 3D-Sensierung anbieten. Die Sensorsubmodule werden vollständig getrennt voneinander in einem gemeinsamen Baustein, dem Kombinationssensorikmodul angeordnet. Besonders bevorzugt sind die Sensorsubmodule sogar galvanisch voneinander getrennt angebracht.

Die zumindest zwei Sensorsubmodule gemeinsam betrachten, beispielsweise jeweils ausgebildet als ein 3D-Sensormodul, bilden somit für das Kombinationssensorikmodul zusammengenommen ein 6D-Sensormodul.

Ein modularer Aufbau des Kombinationssensorikmoduls mag hierbei besonders vorteilhaft sein. Beispielsweise mögen die einzelnen Sensorelemente bzw. Halbleiterelemente jedes Sensorsubmoduls übereinander angeordnet sein in einem sogenannten Stackingverfahren.

Die einzelnen Sensorsubmodule funktionieren hierbei völlig unabhängig voneinander und mögen auch über eine getrennte/eigenständige Spannungsversorgung bzw. Energieversorgung verfügen, sowie beispielsweise über eine separate Diagnosefunktion.

Somit mögen sich im Kombinationssensorikmodul zwei voneinander unabhängige Sensorsubmodule anordnen lassen, welche jedoch nach außerhalb des Kombinationssensorikmoduls als ein gemeinsames 6D-Sensormodul auftreten. Hierzu mag erfindungsgemäß auch eine gemeinsame Steuerung der Bereiche bzw. Funktionsblöcke oder Sensoren bzw. Sensorsubelemente erfolgen, z.B. über ein weiteres Modul wie beispielsweise ein gemeinsames Schnittstellenmodul, angeordnet im Kombinationssensorikmodul.

Das Schnittstellenmodul mag hierbei eine (getrennte) Versorgung, einen Signaltransfer, eine Schnittstelle und Diagnose der Sensorsubmodule bereitstellen, welche zwar getrennt realisiert, jedoch zentral regelbar sein mögen. Das Schnittstellenmodul mag auch festlegen, ob ein Kombinationssensorikmodul beispielsweise als ein 6D-Sensorikmodul, als ein 3D-ESP-Sensorikmodul oder ein 3D-Rotationssensorikmodul eingesetzt wird bzw. sich nach außen dergestalt verhält.

So mag beispielsweise im Falle, dass beide Sensorsubmodule einwandfrei funktionieren, das Kombinationssensorikmodul als ein 6D-Sensorikmodul eingesetzt werden, während im Falle, dass ein Sensorsubmodul einen Defekt aufweist, das Kombinationssensorikmodul zumindest noch als ein 3D-ESP- oder 3D-Rotationssensorikmodul eingesetzt werden mag.

Ein Defekt oder ein selektiver Schaden mag jedoch auch vorliegen, wenn eine geforderte bzw. vorgegebene Messgenauigkeit eines Sensormodules nicht eingehalten werden kann.

In diesem Fall mag ein Sensorsubmodul, welches die vorgegebene Messgenauigkeit einhält, als ein Automotive-Submodul verwendet werden, welches sicherheitsrelevante Funktionen im Fahrzeug bereitstellt bzw. überwacht, während ein Sensorsubmodul, welches die vorgegebene Messgenauigkeit nicht einhalten mag, beispielsweise als ein Teil einer Consumer-Elektronik im Fahrzeug verwendet werden mag, beispielsweise für Bildstabilisierung von Kameras, Anbindung eines Mobiltelefons an die Autoelektronik, Audio- und/oder Video-Wiedergabe.

Das Kombinationssensorikmodul mag, insbesondere unter Verwendung des Schnittstellenmoduls, an ein Ethernet-Bussystem oder Fahrzeug-Bussystem, beispielsweise CAN-Bus oder FlexRay, angeschlossen sein.

Ausführungsbeispiele der Erfindung sind in den Zeichnungen dargestellt und in der nachfolgenden Beschreibung näher erläutert.

Es zeigen
- Figuren 1a-c: eine schematische Darstellung eines exemplarischen Ausführungsbeispiels eines Kombinationssensorikmoduls gemäß der vorliegenden Erfindung; und
- Figuren 2a,b: eine schematische Darstellung einer weiteren exemplarischen Ausgestaltung der vorliegenden Erfindung.

### Ausführungsformen der Erfindung

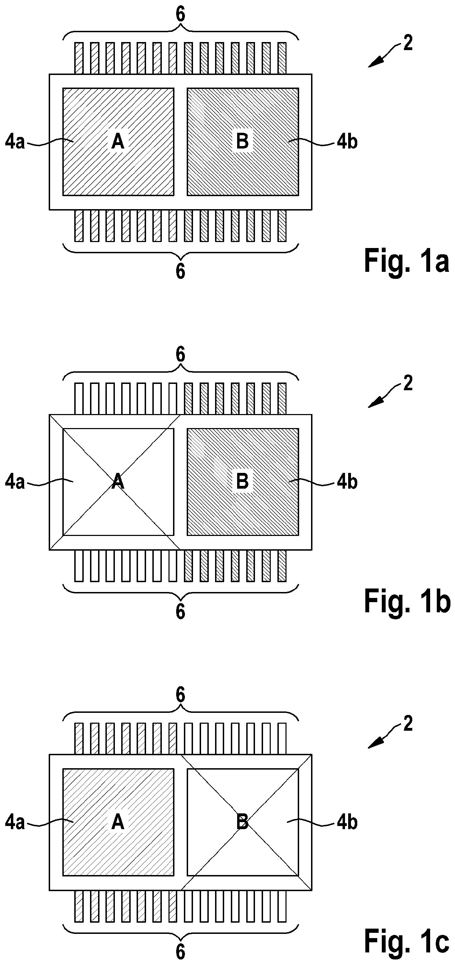

Figuren 1a-c zeigen eine schematische Darstellung eines exemplarischen Ausführungsbeispiels eines Kombinationssensorikmoduls gemäß der vorliegenden Erfindung.

Figur 1a zeigt ein erfindungsgemäßes Kombinationssensorikmodul 2, aufweisend zwei Sensorsubmodule 4a, b, bezeichnet mit den Buchstaben A und B. Die beiden Sensorsubmodule 4a, b sind in einem gemeinsamen Gehäuse des Kombinationssensorikmoduls 2 angeordnet, jedoch vollständig getrennt eingerichtet.

Jeder der beiden Bereiche bzw. jedes der Sensorsubmodule 4a, b ist eingerichtet, unterschiedliche Funktionen, insbesondere getrennt vom jeweils anderen Sensorsubmodul 4b,a bereitzustellen.

So mag beispielsweise Sensorsubmodul 4a als ESP-Sensormodul und Sensorsubmodul 4b als Rollover-Sensormodul ausgebildet sein. Für jede dieser unterschiedlichen Modulfunktionen mögen beispielsweise 3D-Sensierung benötigt werden, welche zusammen eine 6D-Sensierung ergeben mögen. Die Bereiche A und B der Sensorsubmodule 4a, b sind jeweils an unterschiedlichen Pins 6 aus dem Gehäuse bzw. aus dem Kombinationssensorikmodul 2 herausgeführt.

Das Kombinationssensorikmodul 2 gemäß Figur 1a ist hierbei in allen Bereichen A und B einsatzbereit und entspricht damit mindestens einem 5D- bzw. 6D-Modul, gesehen über beide Bereiche A und B.

Figur 1b stellt ein Kombinationssensorikmodul 2 dar gemäß Figur 1a, hierbei ist jedoch angenommen, dass Bereich A bzw. Sensorsubmodul 4a in einem nicht funktionsfähigen Zustand ist. Bereich A bzw. Sensorsubmodul 4a mag hierbei entweder fehlerhaft sein, zum Beispiel aufgrund eines Defektes während der Herstellung, oder auch nach Vorgabe nicht getestet bzw. nicht freigegeben worden sein.

Produktionstechnisch mag sich das Kombinationssensorikmodul 2 gemäß Figur 1b von einem Vollmodul 2 gemäß Figur 1 a ableiten lassen, ist jedoch nur als "B-Modul" mit der Funktionalität des Bereichs B bzw. des Sensorsubmoduls 4b einsetzbar. Die zum Bereich A bzw. Sensorsubmodul 4a gehörenden Pins 6 mögen entweder nicht belegt, nicht durchkontaktiert oder auch gleichfalls überhaupt nicht vorhanden bzw. nach außen geführt sein.

Kombinationssensorikmodul 2 gemäß Figur 1c ist wiederum vom Kombinationssensorikmodul 2 als Vollmodul gemäß Figur 1 a abgeleitet, hierbei ist jedoch nur der Bereich A bzw. das Sensorsubmodul 4a funktionsfähig. Somit stellt Kombinationssensorikmodul 2 gemäß Figur 1c im Wesentlichen ein "A-Modul" mit A-Funktionalität dar.

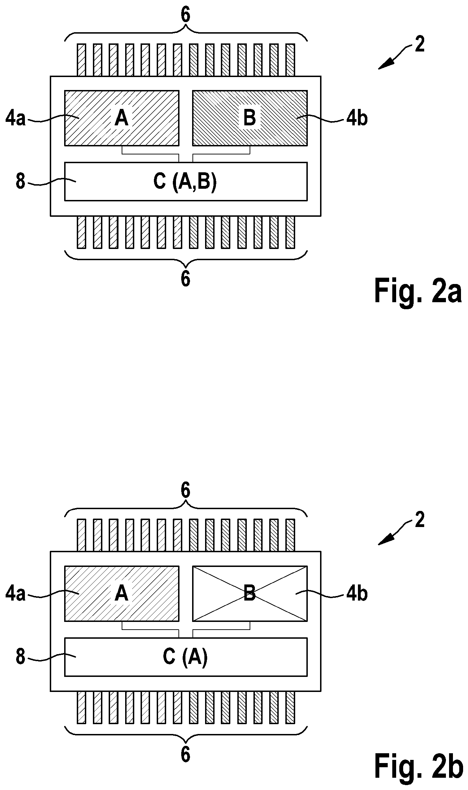

Weiter Bezug nehmend auf Figuren 2a, b ist eine schematische Darstellung einer weiteren exemplarischen Ausgestaltung der vorliegenden Erfindung dargestellt.

Figur 2a zeigt eine erweiterte Ausführung der vorliegenden Erfindung. Das Kombinationssensorikmodul 2 besitzt wieder zumindest zwei unabhängige funktionale Bereiche A, B bzw. zumindest zwei Sensorsubmodule 4a, b.

Ein weiteres Schnittstellenmodul 8 bzw. ein Bereich C ist im Kombinationssensorikmodul 2 vorgesehen, welches gemeinsame Funktionen für die Sensorsubmodule 4a,b bereitstellt. So mag Schnittstellenmodul 8 eine gemeinsame Energieversorgung, Diagnose, Signalaufbereitung und/oder Schnittstellenfunktion für Sensorsubmodule 4a,b bereitstellen.

Hierbei ist Schnittstellenmodul 8 jedoch derart ausgebildet, dass es die jeweiligen Funktionalitäten an eines der Sensorsubmodule 4a,b bereitstellen kann, ohne durch das andere Sensorsubmodul beeinträchtigt zu werden. In anderen Worten stellt Schnittstellenmodul 8 gleichfalls unabhängig die jeweiligen Funktionalitäten den Sensorsubmodulen 4a, b bereit.

Die Sensorsubmodule 4a, b mögen beispielsweise parallel oder in einem Multiplexverfahren an das Schnittstellenmodul 8 angebunden sein. Pins 6 stellen wiederum eine Kontaktierungsmöglichkeit des Kombinationssensorikmoduls 2 nach außen bereit.

In Figur 2a dargestellt ist das Kombinationssensorikmodul 2 mit vollem Funktionsumfang, bestehend aus zwei voll funktionsfähigen Sensorsubmodulen 4a, b.

Kombinationssensorikmodul 2 gemäß Figur 2b entspricht im Wesentlichen dem Vollmodul bzw. Kombinationssensorikmodul 2 gemäß Figur 2a, wobei jedoch analog Figur 1c Bereich B bzw. Sensorsubmodul 4b deaktiviert, nicht freigegeben bzw. nicht funktional ist, so dass das gesamte Kombinationssensorikmodul 2 gemäß Figur 2b im Wesentlichen ein "A-Modul" darstellt und A-Funktionalität bereitstellt.

## Patentansprüche

1. Kombinationssensorikmodul (2) für ein Fahrzeug, aufweisend
zumindest ein erstes Sensorsubmodul (4a) und ein zweites Sensorsubmodul (4b), beide Sensorsubmodule (4a, b) angeordnet im Kombinationssensorikmodul (2) und anschließbar an die Elektronik des Fahrzeuges,
**dadurch gekennzeichnet, dass**
die zumindest zwei Sensorsubmodule (4a, b) unabhängig voreinander betreibbar sind,
wobei das Kombinationssensorikmodul (2) dazu eingerichtet ist,
bei selektiven Produktionsschäden des ersten Sensorsubmoduls (4a) nur mit der Funktionalität des zweiten Sensorsubmoduls (4b) betreibbar zu sein,
bei selektiven Produktionsschäden des zweiten Sensorsubmoduls (4b) nur mit der Funktionalität des ersten Sensorsubmoduls (4a) betreibbar zu sein, und
bei keinen Produktionsschäden mit der Funktionalität der beiden Sensorsubmodule (4a, b) betreibbar zu sein.

2. Kombinationssensorikmodul gemäß dem vorhergehenden Anspruch, wobei unabhängig betreibbar bedeutet, dass eines der zumindest zwei Sensorsubmodule eingerichtet ist bei Defekt oder Ausfall des Weiteren der zumindest zwei Sensorsubmodule weiterhin betreibbar zu sein.

3. Kombinationssensorikmodul gemäß zumindest einem der vorhergehenden Ansprüche, weiterhin aufweisend
ein Schnittstellenmodul (8),
wobei die zumindest zwei Sensorsubmodule (4a, b) mit dem Schnittstellenmodul (8) kommunikativ gekoppelt sind; und
wobei das Schnittstellenmodul (8) zumindest eine der Funktionen aus der Gruppe bestehend aus Energieversorgung, Diagnose, Signalaufbereitung und Schnittstellenfunktionalität für die zumindest zwei Sensorsubmodule (4a, b) bereitstellt.

4. Kombinationssensorikmodul gemäß zumindest einem der vorhergehenden Ansprüche,
wobei jedes der zumindest zwei Sensorsubmodule (4a, b) als ein 3D-Sensormodul ausgebildet ist, und/oder
wobei die zumindest zwei Sensorsubmodule (4a, b) zusammen als ein 6D-Sensormodul ausgebildet sind.

5. Kombinationssensorikmodul gemäß zumindest einem der vorhergehenden Ansprüche,
wobei jedes der zumindest zwei Sensorsubmodule (4a, b) ausgebildet ist als ein Sensormodul aus der Gruppe bestehend aus Rollover-Sensormodul, Pitchraten-Sensormodul, ESP-Sensormodul, 3D Drehratenmodul und triaxialer Beschleunigungssensor.

6. Kombinationssensorikmodul gemäß zumindest einem der vorhergehenden Ansprüche,
wobei die zumindest zwei Sensorsubmodule (4a, b) galvanisch voneinander getrennt ausgebildet und im Kombinationssensorikmodul (2) angeordnet sind.

7. Kombinationssensorikmodul gemäß zumindest einem der vorhergehenden Ansprüche,
wobei das Kombinationssensorikmodul (2) als 6D-Sensormodul betreibbar ist, falls die zumindest zwei Sensorsubmodule (4a, b) keinen Defekt aufweisen; und
wobei das Kombinationssensorikmodul (2) zumindest als 3D-Sensormodul betreibbar ist, falls eines der zumindest zwei Sensorsubmodule (4a, b) einen Defekt aufweist.

8. Fahrzeug, insbesondere Automobil, aufweisend ein
Kombinationssensorikmodul (2) gemäß zumindest einem der vorhergehenden Ansprüche.

9. Verwendung eines Kombinationssensorikmodul (2) gemäß zumindest einem der vorhergehenden Ansprüche in einem Fahrzeug.

10. Verwendung gemäß Anspruch 9,
wobei das Kombinationssensorikmodul (2) als 6D-Sensormodul betreibbar ist, falls die zumindest zwei Sensorsubmodule (4a, b) keinen Defekt aufweisen; und
wobei das Kombinationssensorikmodul (2) zumindest als 3D-Sensormodul betreibbar ist, falls eines der zumindest zwei Sensorsubmodule (4a, b) einen Defekt aufweist.

## Claims

1. Combination sensor module (2) for a vehicle, having at least one first sensor submodule (4a) and one second sensor submodule (4b), both sensor submodules (4a, b) being arranged in the combination sensor module (2) and being connectable to the electronics of the vehicle, **characterized in that**
the at least two sensor submodules (4a, b) are operable independently of one another,
wherein the combination sensor module (2) is configured to be operable only with the functionality of the second sensor submodule (4b) in the event of selective production damage to the first sensor submodule (4a), to be operable only with the functionality of the first sensor submodule (4a) in the event of selective production damage to the second sensor submodule (4b), and
to be operable with the functionality of the two sensor submodules (4a, b) in the event of no production damage.

2. Combination sensor module according to the preceding claim,
wherein independently operable means that one of the at least two sensor submodules is configured to still be operable in the event of a defect or failure of the further one of the at least two sensor submodules.

3. Combination sensor module according to at least one of the preceding claims, also having
an interface module (8),
wherein the at least two sensor submodules (4a, b) are communicatively coupled to the interface module (8); and wherein the interface module (8) provides at least one of the functions from the group consisting of energy supply, diagnosis, signal conditioning and interface functionality for the at least two sensor submodules (4a, b) .

4. Combination sensor module according to at least one of the preceding claims,
wherein each of the at least two sensor submodules (4a, b) is in the form of a 3-D sensor module, and/or wherein the at least two sensor submodules (4a, b) are together in the form of a 6-D sensor module.

5. Combination sensor module according to at least one of the preceding claims,
wherein each of the at least two sensor submodules (4a, b) is in the form of a sensor module from the group consisting of a rollover sensor module, a pitch rate sensor module, an ESP sensor module, a 3-D rotation rate module and a triaxial acceleration sensor.

6. Combination sensor module according to at least one of the preceding claims,
wherein the at least two sensor submodules (4a, b) are DC-isolated from one another and are arranged in the combination sensor module (2).

7. Combination sensor module according to at least one of the preceding claims,
wherein the combination sensor module (2) is operable as a 6-D sensor module if the at least two sensor submodules (4a, b) do not have a defect; and
wherein the combination sensor module (2) is operable at least as a 3-D sensor module if one of the at least two sensor submodules (4a, b) has a defect.

8. Vehicle, in particular automobile, having a combination sensor module (2) according to at least one of the preceding claims.

9. Use of a combination sensor module (2) according to at least one of the preceding claims in a vehicle.

10. Use according to Claim 9,
wherein the combination sensor module (2) is operable as a 6-D sensor module if the at least two sensor submodules (4a, b) do not have a defect; and
wherein the combination sensor module (2) is operable at least as a 3-D sensor module if one of the at least two sensor submodules (4a, b) has a defect.

## Revendications

1. Module de détection combiné (2) pour un véhicule, présentant
au moins un premier sous-module de capteur (4a) et un deuxième sous-module de capteur (4b), les deux sous-modules de capteur (4a, b) étant disposés dans le module de détection combiné (2) et pouvant être connectés à l'électronique du véhicule,
**caractérisé en ce que**
les au moins deux sous-modules de capteur (4a, b) peuvent fonctionner indépendamment l'un de l'autre,
le module de détection combiné (2) étant aménagé pour pouvoir fonctionner uniquement avec la fonctionnalité du deuxième sous-module de capteur (4b) en cas de défauts de fabrication sélectifs du premier sous-module de capteur (4a),
pouvoir fonctionner uniquement avec la fonctionnalité du premier sous-module capteur (4a) en cas de défauts de fabrication sélectifs du deuxième sous-module de capteur (4b), et
pouvoir fonctionner avec la fonctionnalité des deux sous-modules de capteur (4a, b) en cas d'absence de défauts de fabrication.

2. Module de détection combiné selon la revendication précédente, dans lequel un fonctionnement indépendant signifie que l'un des au moins deux sous-modules de capteur est aménagé pour continuer à fonctionner en cas de défaillance ou de panne de l'autre des au moins deux sous-modules de capteur.

3. Module de détection combiné selon au moins l'une des revendications précédentes, présentant en outre un module d'interface (8),
les au moins deux sous-modules de capteur (4a, b) étant couplés en communication avec le module d'interface (8) ; et
le module d'interface (8) fournissant au moins l'une des fonctions issues du groupe composé d'une alimentation en énergie, d'un diagnostic, d'une mise en forme de signal et d'une fonctionnalité d'interface pour les au moins deux sous-modules de capteur (4a, b).

4. Module de détection combiné selon au moins l'une des revendications précédentes,
chacun des au moins deux sous-modules de capteur (4a, b) étant réalisé sous la forme d'un module de capteur 3D, et/ou
les au moins deux sous-modules de capteur (4a, b) étant réalisés conjointement sous la forme d'un module de capteur 6D.

5. Module de détection combiné selon au moins l'une des revendications précédentes, dans lequel chacun des au moins deux sous-modules de capteur (4a, b) est réalisé sous la forme d'un module de capteur issu du groupe composé d'un module de capteur de renversement, d'un module de capteur de taux de tangage, d'un module de capteur ESP, d'un module de vitesse de rotation 3D et d'un capteur d'accélération triaxial.

6. Module de détection combiné selon au moins l'une des revendications précédentes, dans lequel les au moins deux sous-modules de capteur (4a, b) sont réalisés de manière isolée galvaniquement l'un de l'autre dans le module de détection combiné (2).

7. Module de détection combiné selon au moins l'une des revendications précédentes,
le module de détection combiné (2) pouvant fonctionner comme un module de capteur 6D si les au moins deux sous-modules de capteur (4a, b) ne présentent aucune défaillance ; et
le module de détection combiné (2) pouvant fonctionner au moins comme un module de capteur 3D si l'un des au moins deux sous-modules de capteur (4a, b) présente une défaillance.

8. Véhicule, en particulier véhicule automobile, présentant un module de détection combiné (2) selon au moins l'une des revendications précédentes.

9. Utilisation d'un module de détection combiné (2) selon au moins l'une des revendications précédentes dans un véhicule.

10. Utilisation selon la revendication 9,
le module de détection combiné (2) pouvant fonctionner comme un module de capteur 6D si les au moins deux sous-modules de capteur (4a, b) ne présentent aucune défaillance ; et
le module de détection combiné (2) pouvant fonctionner au moins comme un module de capteur 3D si l'un des au moins deux sous-modules de capteur (4a, b) présente une défaillance.
